(19) Europäisches Patentamt
European Patent Office
Office européen des brevets

(11) EP 0 476 677 B1

## (12) EUROPEAN PATENT SPECIFICATION

(45) Date of publication and mention
of the grant of the patent:
**12.03.1997 Bulletin 1997/11**

(51) Int Cl.⁶: **G01S 17/58**

(21) Application number: **91115995.2**

(22) Date of filing: **19.09.1991**

(54) **Displacement information detection apparatus**

Gerät zur Detektion von Bewegungsinformation

Appareil pour capter des informations de déplacement

(84) Designated Contracting States:
**DE FR GB IT NL**

(30) Priority: **21.09.1990 JP 252290/90**
**06.09.1991 JP 255784/91**

(43) Date of publication of application:
**25.03.1992 Bulletin 1992/13**

(73) Proprietor: **CANON KABUSHIKI KAISHA**
**Tokyo (JP)**

(72) Inventors:
- **Hidejiro, Kadowaki, c/o Canon Kabushiki Kaisha**
  **Ohta-ku, Tokyo (JP)**
- **Hiroshi, Sugiyama, c/o Canon Kabushiki Kaisha**
  **Ohta-ku, Tokyo (JP)**
- **Yasuhiko, Ishida, c/o Canon Kabushiki Kaisha**
  **Ohta-ku, Tokyo (JP)**

- **Makoto, Takamiya, c/o Canon Kabushiki Kaisha**
  **Ohta-ku, Tokyo (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4**
**80336 München (DE)**

(56) References cited:
**DE-A- 3 008 252          FR-A- 2 380 554**
**US-A- 4 948 257**

- **APPLIED OPTICS. vol. 27, no. 23, 1 December 1988, NEW YORK US pages 4844 - 4849; R. BÄTTIG ET AL.: 'Probing a fluid through a distorting interface using a monostatic fiber-optic Doppler velocimeter'**

## Description

### BACKGROUND OF THE INVENTION

#### Field of the Invention

The present invention relates to a displacement information detection apparatus. For example, the present invention is suitable for a Doppler velocimeter which radiates a laser beam onto a moving object or fluid (to be referred to as a "moving object" hereinafter), and detects a shift in frequency of scattered light which is Doppler-shifted according to a moving velocity of the moving object, thereby measuring the moving velocity of the moving object in a noncontact manner.

#### Related Background Art

As a conventional apparatus for measuring a moving velocity of a moving object with high precision in a noncontact manner, a laser Doppler velocimeter is used. The laser Doppler velocimeter is an apparatus for radiating a laser beam onto a moving object, and measuring the moving velocity of the moving object by utilizing an effect (Doppler effect) in that the frequency of scattered light from the moving object is shifted in proportion to the moving velocity of the moving object.

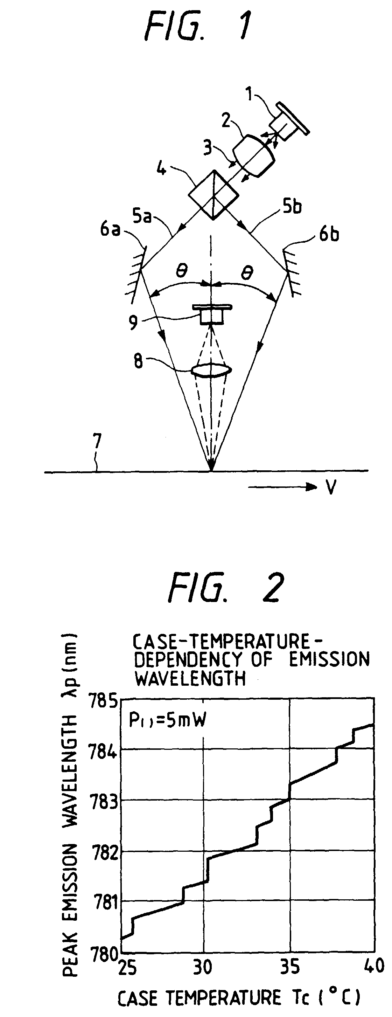

Fig. 1 is a diagram for explaining a conventional laser Doppler velocimeter.

In Fig. 1, a laser beam emitted from a laser 1 is converted into a collimated beam 3 by a collimator lens 2, and the collimated beam is split into a transmission beam 5a and a reflection beam 5b by a beam splitter 4. These beams 5a and 5b are respectively reflected by reflection mirrors 6a and 6b, and the reflected beams are then radiated from different directions at an incident angle $\theta$ on a moving object 7, which is moving at a speed V. Scattered lights from the moving object 7 are detected by a photosensor 9 via a focusing lens 8. In this case, the frequencies of scattered lights based on the two beams are Doppler-shifted by $+\Delta f$ and $-\Delta f$ in proportion to the moving speed V. If the wavelength of the laser beam is represented by $\lambda$, a frequency change $\Delta f$ can be expressed by the following equation (1):

$$\Delta f = V \cdot \sin(\theta)/\lambda \qquad (1)$$

The scattered lights Doppler-shifted by $+\Delta f$ and $-\Delta f$ interfere with each other, and cause a change in brightness pattern on the light-receiving surface of the photosensor 9. The frequency F of the scattered light is given by the following equation (2):

$$F = 2 \cdot \Delta f = 2 \cdot V \cdot \sin(\theta)/\lambda \qquad (2)$$

When the frequency F of the photosensor 9 (to be referred to as a "Doppler frequency" hereinafter) is measured from equation (2), the moving velocity of the moving object 7 can be obtained.

In the conventional laser Doppler velocimeter, the Doppler frequency F is inversely proportional to the wavelength $\lambda$ of the laser, as can be seen from equation (2). Therefore, the laser Doppler velocimeter must employ a laser light source having a stable wavelength. As a laser light source capable of performing continuous oscillation, and having a stable wavelength, a gas laser such as an He-Ne laser is often used. However, a laser oscillator itself is bulky, and requires a high voltage in a power supply. As a result, the apparatus tends to become bulky and expensive.

A laser diode (or a semiconductor laser) used in a compact disk device, a video disk device, an optical fiber communication, and the like is very small, and is easily driven. However, the laser diode has temperature dependency.

Fig. 2 is a graph for explaining a standard temperature dependency of a laser diode (quoted from '87 Mitsubishi Semiconductor Data Book; Optical Semiconductor Element Edition). A portion where the wavelength is continuously changed is mainly caused by a change in refractive index of an active layer of the laser diode according to a change in temperature, and changes at a rate of 0.05 to 0.06 nm/°C. On the other hand, a portion where the wavelength is discontinuously changed is called longitudinal mode hopping, and changes at a rate of 0.2 to 0.3 nm/°C.

In order stabilize the wavelength, a method of controlling the laser diode to have a predetermined temperature is normally employed. In this method, temperature control members, such as a heater, a radiator, a temperature sensor, and the like must be attached to the laser diode with a low heat resistance, and precise temperature control must be performed. As a result, the laser Doppler velocimeter becomes relatively large in size, and its cost is increased. In addition, instability in wavelength caused by the longitudinal mode hopping cannot be perfectly eliminated.

As a laser Doppler velocimeter which can solve the above-mentioned problems, the following system (to be referred to as a G-LDV hereinafter) has been proposed. In this system, a laser beam is incident on a diffraction grating, and of diffraction lights obtained from the diffraction grating, two, i.e., +nth-order and -nth-order (n = 1, 2, ...) diffraction lights other than the 0th-order diffraction light are radiated on a moving object at the same crossing angle as an angle defined by the above-mentioned two beams. Scattered lights from the moving object are detected by a photosensor.

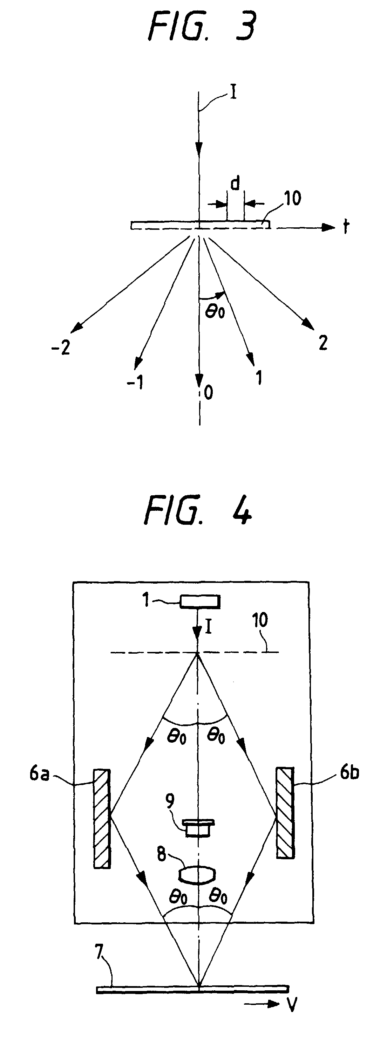

Fig. 3 shows diffraction lights obtained when a laser beam I is incident on a transmission type diffraction grating 10 having a grating pitch d, in a direction perpendicular to an arranging direction t of the gratings. In this case, a diffraction angle $\theta_0$ is given by:

$$\sin\theta_0 = m\lambda/d$$

where m is the diffraciton order (0, 1, 2, ...), and $\lambda$ is the wavelength of the laser beam.

Of these lights, $\pm$nth-order lights other than the 0th-order lights are expressed by the following equation:

$$\sin\theta_0 = \pm n\lambda/d \qquad (3)$$

(n = 1, 2, ...)

Fig. 4 is a diagram for explaining a Doppler velocimeter, for radiating the $\pm$nth-order lights on the moving object 7 from different directions to have an incident angle $\theta_0$. From equations (2) and (3), the Doppler frequency F of the photosensor 9 is given by:

$$F = 2V\sin\theta_0/\lambda = 2nV/d \qquad (4)$$

More specifically, the frequency F is inversely proportional to the grating pitch d of the diffraction grating 10 independently of the laser beam l, and is proportional to the moving velocity of the moving object 7. Since the grating pitch d can be sufficiently stable, the Doppler frequency F is proportional to only the moving velocity of the moving object 7. Note that the same applies to a case wherein the diffraction grating 10 comprises a reflection type diffraction grating.

A laser Doppler velocimeter (LDV) according to the pior art described above has been disclosed in US-A-4 948 257.

SUMMARY OF THE INVENTION

The objet of the invention is defined in appended claim 1.

Other objects of the present invention will be apparent from the following detailed description and are claimed in the dependent claims.

BRIEF DESCRIPTION OF THE DRAWINGS

Fig. 1 is a schematic diagram of a conventional Doppler velocimeter;
Fig. 2 is a graph for explaining temperature dependency of an oscillation wavelength of a laser diode;
Fig. 3 is a diagram for explaining a diffraction grating;
Fig. 4 is a diagram for explaining a Doppler velocimeter using the diffraction grating;
Fig. 5 is a schematic diagram of principal part of the first embodiment of the present invention;
Fig. 6 is a schematic diagram of the principal part when a reflection mirror 6a shown in Fig. 5 is inclined;

Fig. 7 is a chart for explaining a Doppler frequency when the reflection mirror 6a shown in Fig. 6 is inclined;
Figs. 8A and 8B are respectively a plan view and a side view of the second embodiment of the present invention; and
Figs. 9A and 9B are respectively a plan view and a side view of the third embodiment of the present invention.

DETAILED DESCRIPTION OF THE PREFERRED EMBODIMENTS

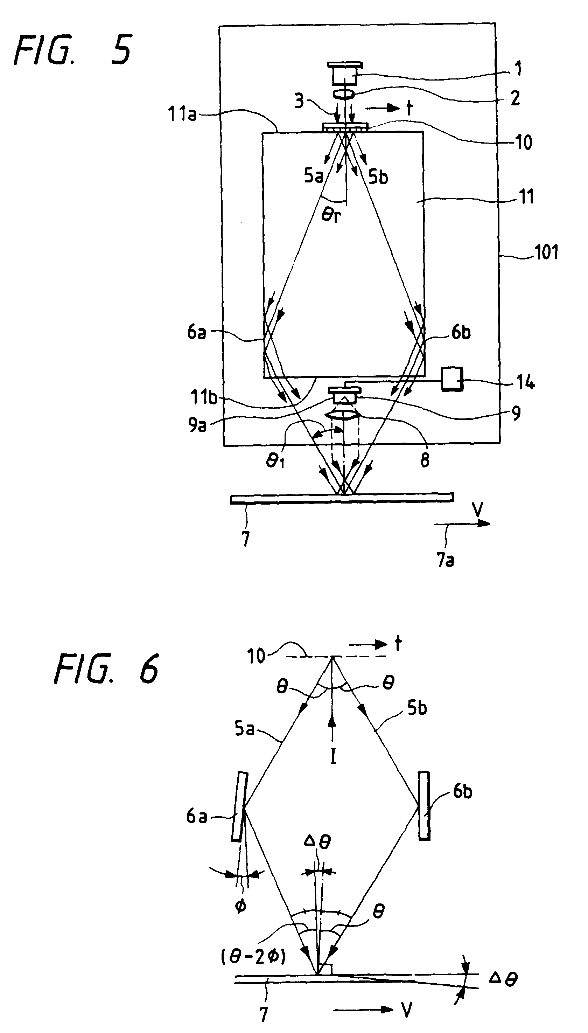

Fig. 5 is a schematic diagram of an optical system according to the first embodiment of the present invention. In Fig. 5, a Doppler velocimeter 101 includes a light source 1 comprising, e.g., a laser diode, a semiconductor laser, or the like (to be referred to as a "laser" hereinafter), a collimator lens 2 for converting a light beam from the laser 1 into a collimated beam 3, and a diffraction grating 10 which comprises a transmission type diffraciton grating having a grating pitch d = 1.6 $\mu$m, and is set to diffract $\pm$1st-order diffraction lights at a diffraction angle $\theta_1$ ($\theta_1$ = 29° in air).

A beam transmission means 11 comprises a prism-like glass block (a refractive index = 1.5). Side surfaces 6a and 6b of the beam transmission means 11 serve as total reflection or mirror-surface reflection surfaces (surfaces formed with reflection films).

The diffraction grating 10 is fixed on a portion of an upper surface (incident surface) 11a of the beam transmission means 11. The reflection surfaces 6a and 6b are perpendicular to a grating arranging direction t of the diffraction grating 10, and are parallel to each other. More specifically, the two reflection surfaces 6a and 6b face each other and are parallel to each other.

A moving object or moving fluid (to be referred to as a "moving object" hereinafter) 7 is moving in a direction of an arrow 7a at a moving velocity V. A focusing lens 8 focuses Doppler-shifted scattered lights from the moving object 7 onto a detection surface 9a of a photosensor 9 as a detection means. The surface of the moving object 7 is substantially conjugate with the detection surface 9a. An arithmetic means 14 calculates the moving velocity V using a Doppler signal obtained by the photosensor 9.

In this embodiment, a laser beam having a wavelength $\lambda$ of about 0.78 $\mu$m emitted from the laser 1 is converted into the collimated beam 3 having a spot size of about 2 mm, and the collimated beam is incident on the transmission type diffraction grating 10 in a direction perpendicular to the grating arranging direction t. $\pm$nth-order (n = 1 in this embodiment) diffraction lights 5a and 5b to be diffracted by the diffraction grating 10 at the diffraction angle $\theta_1$ ($\theta_1$ = 29°) in air are incident from the incident surface 11a of the beam transmission means 11. A diffraction angle $\theta_r$ of the diffraction lights with in the beam transmission means 11 is given by:

$$1.5\sin\theta_r = \lambda/d \qquad (5)$$

In this embodiment, the angle $\theta_r$ is about 19°.

The diffraction lights 5a and 5b incident on the beam transmission means 11 propagate through the interior of the beams 11, and are reflected at the reflection surfaces 6a and 6b as the side surfaces. The reflected lights emit from an exit surface 11b. The diffraction lights 5a and 5b emitting from the beam transmission means 11 are incident on the moving object 7 from different angles at the same incident angle $\theta'_1$ ($\theta'_1 = 29°$) as the diffraction angle $\theta_1$ so as to cross each other on the surface of the moving object 7. More specifically, in air, an angle to be formed by the two diffraction lights immediately after they emit from the diffraction grating coincides with a crossing angle defined by the two diffraction lights on the object in air.

With the above-mentioned arrangement of this embodiment, the ±nth-order diffraction angle (of the diffraction lights) from the diffraction grating 10 changes according to a change in wavelength $\lambda$. An angle $\theta$ defined between the diffraction lights 5a and 5b and a direction perpendicular to a velocity measurement direction in a plane including the velocity measurement direction (direction 7a) and the optical paths of the diffraction lights 5a and 5b, that is, in this embodiment, the incident angle $\theta$ to the moving object, changes accordingly. Thus, the components such as the diffraction grating, the beam transmission means, and the like are arranged so as to obtain a substantially constant ratio $\sin(\theta)/\lambda$ at this time. In other words, these components are arranged so that both an angle to be formed by the two diffraction lights in air immediately after they emit from the diffraction grating and a crossing angle of the two diffraction lights on the moving object can become constant independently of the wavelength.

The focusing lens 8 focuses scattered lights having frequencies Doppler-shifted by $+\Delta f$ and $-\Delta f$ given by equation (1) and proportional to the moving velocity V of the moving object 7 on the detection surface 9a of the photosensor 9. The two scattered lights Doppler-shifted by $+\Delta f$ and $-\Delta f$ interfere with each other on the detection surface 9a. The photosensor 9 detects a light amount on the basis of the brightness pattern of the interference fringes at that time. More specifically, the photosensor 9 detects a Doppler signal representing a Doppler frequency F proportional to the moving velocity V, and given by the following equation obtained by substituting n = 1 in equation (4) independently of the oscillation frequency $\lambda$ of the laser 1:

$$F = 2V/d \qquad (6)$$

The arithmetic means 14 calculates the moving velocity V using the output signal from the photosensor 9 in accordance with equation (6).

In this embodiment, as described above, since the diffraction grating 10 and the beam transmission means 11 for causing two diffraction lights of the predetermined orders from the diffraction grating 10 to be incident on the moving object 7 are integrally arranged, the two diffraction lights 5a, 5b can be incident on the moving object at a predetermined angle (equal to the diffraction angle $\theta_1$) in a state free from aging, and assuring high stability.

More specifically, in the Doppler velocimeter of this embodiment, a light beam having a wavelength $\lambda$ is incident on the diffraction grating, diffraction lights of the predetermined orders diffracted by the diffraction grating are incident on the moving object at the incident angle $\theta$, and velocity information of the moving object is detected on the basis of a frequency shift of scattered lights from the moving object, wherein the incident angle $\theta$ changes in accordance with the wavelength $\lambda$ of the diffraction lights, the diffraction lights are incident on the moving object via the beam transmission means so as to make $\sin(\theta)/\lambda$ almost constant, and the diffraction grating and the beam transmission means are integrally arranged, thus providing a velocimeter having more stable structure.

In other words, a light beam from the light source is incident on the diffraction grating. Two, i.e., +nth- and -nth-order (n = 1, 2, 3, ...) diffraction lights from the diffraction grating are radiated at the same angle as the crossing angle of the two lights on the surface of the moving object from different directions via the beam transmission means having the two parallel reflection surfaces so that the two diffraction lights cross each other near the surface of the moving object. Two Doppler-shifted scattered lights from the surface of the moving object are detected by the detection means, and the moving velocity of the moving object is detected by utilizing a signal obtained by the detection means. In this case, since the diffraction grating and the beam transmission means are integrally arranged, the above-mentioned stable structure can be realized.

The beam transmission means comprises a glass block, and the diffraction grating is fixed to a portion of the glass block. The diffraction lights of the predetermined orders from the diffraction grating are caused to pass through the glass block, and are reflected at the reflection surfaces of the side surfaces. Thereafter, the diffraction lights emit form the glass block, and are incident on the moving object.

The effect of the above-mentioned structure will be described in detail below using comparative examples.

The reflection mirrors 6a and 6b must be perpendicular to the diffraction grating 10, and must be parallel to each other so as to establish equation (4) and to detect the moving velocity of the moving object independently of the wavelength of a laser beam I in the Doppler velocimeter shown in Fig. 4.

A change in Doppler frequency F when one reflection mirror 6a is inclined due to an assembling error or a change in environment will be described below with reference to Fig. 6.

In Fig. 6, assume that the reflection mirror 6b is perpendicular to the grating arranging direction t of the diffraction grating, and the reflection mirror 6a is inclined at an angle $\phi$ with respect to the reflection mirror 6b. The lights 5a and 5b are assumed to be ±1st-order diffraction lights.

In this case, a laser beam I propagates along optical paths shown in Fig. 6. If an angle defined between the perpendicular of the moving object 7 and a bisector of the lights 5a and 5b to the moving object 7 when the reflection mirrors 6a and 6b are parallel to each other, is represented by $\Delta\theta$, the Doppler frequency F is given by:

$$F = 2V \cdot \cos\Delta\theta \cdot \sin(\theta-\phi)/\lambda \qquad (7)$$

Since $\Delta\theta = \phi$ and $d\sin\theta = \lambda$, we have:

$$F = \frac{2V \cdot \cos\phi \cdot \sin(\theta-\phi)}{d\sin\theta} \qquad (8)$$

That is, when the reflection mirror 6a is inclined, a frequency variation of the laser beam influences the Doppler frequency.

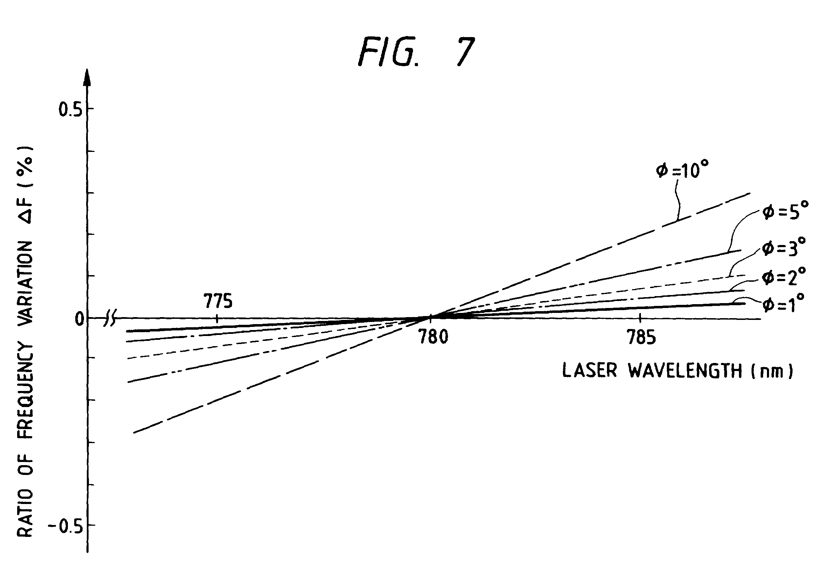

Fig. 7 shows ratios of frequency variation in correspondence with some inclination angles $\phi$ of the reflection mirror 6a when the wavelength of the laser beam is changed with respect to the Doppler frequency when the reference wavelength $\lambda = 0.78\,\mu m$. As can be seen from Fig 7, as the inclination angle $\phi$ of the reflection mirror 6a is increased, the ratio of frequency variation caused by the wavelength variation is increased.

An inclination error of the reflection mirror similarly occurs when a member for holding the reflection mirror expands contracts due to a change in temperature.

In this embodiment, since the diffraction grating and the reflection surfaces are arranged integrally with the glass block, a variation in relative positional relationship due to aging or an environmental change does not easily occur.

More specifically, according to this embodiment, as described above, since the diffraction grating and the beam transmission means having the two reflection surfaces for causing diffraction lights of the predetermined orders from the diffraction grating to be incident on the surface of the moving object are integrally arranged, a Doppler velocimeter which has a stable structure, has high reliability against an environmental change, requires neither adhesion for holding the reflection mirrors nor a pressing member such as a spring, and can detect the moving velocity of the moving object with high precision while simplifying the overall structure of the apparatus, can be realized.

In this embodiment, the beam transmission means 11 may comprise a hollow prism or polygonal-prism-like case having parallel reflection surfaces 6a and 6b, and the diffraction grating 10 may be integrally arranged on the upper surface of the means 11. As the diffraction grating, a reflection type diffraction grating may be similarly adopted in addition to the transmission type diffraction grating.

The incident angle of the laser beam 3 on the diffraction grating 10 is not limited to 90°. For example, the laser beam may be incident on the diffraction grating at a predetermined angle. In this case, two diffraction lights of ±nth-order diffraction lights produced by the diffraction grating 10 are incident on the moving object while maintaining the same crossing angle as the crossing angle of the two diffraction lights of the ±nth-order diffraction lights.

If a light beam emitted from an identical light source is used, and if at least one of two diffraction lights to be incident on the moving object is an nth-order diffraction light, the other diffraction light can have any order other than the nth order such as the 0th order, (n+1)th order, (n+2)th order, and the like.

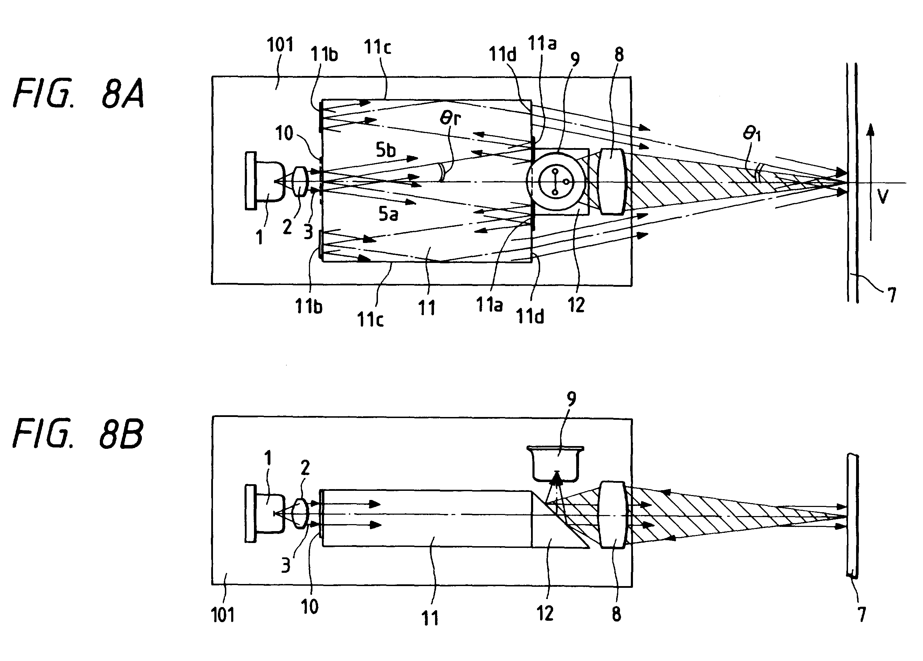

Figs. 8A and 8B show the second embodiment of the present invention. Fig. 8A is a plan view of optical paths of two light beams, and Fig. 8B is a side view of a light-receiving optical path. The same reference numerals in Fig. 8 denote the same parts as in Fig. 5. In this embodiment, a glass block 11 comprises a rectangular glass member having a refractive index = 1.5, and its surfaces 11a and 11b are coated with reflection films.

A laser diode 1 emits a laser beam having a wavelength $\lambda$ of about 0.67 $\mu m$, and the laser beam is converted into a collimated beam 3 having a spot size of 2 mm by a collimator lens 2. A transmission type diffraction grating 10 has a grating pitch d = 3.2 $\mu m$, and is set to efficiently output ±1st-order diffraction lights 5a and 5b. The diffraction grating 10 is fixed to the glass member 11.

The diffraction lights 5a and 5b are transmitted through the interior of the glass member 11, and a diffraction angle $\theta$ of the diffraction lights 5a and 5b satisfies the above-mentioned equation (5), and is about 8°:

$$1.5 \times \sin\theta_r = \lambda/d$$

Furthermore, the lights 5a and 5b are reflected by the surfaces 11a and 11b of the glass member 11, and are then totally reflected by surfaces 11c by internal reflection. The reflected lights 5a and 5b are then transmitted through a surface 11d in turn, and are incident on an object 7 to be measured at an incident angle $\theta$ which is given by equation (9), and is about 12°:

$$\sin\theta = \lambda/d \qquad (9)$$

Scattered lights including a Doppler signal from the object 7 to be measured propagate through a focusing lens 8, turn their optical paths at a reflection prism 12, and are then introduced into a photosensor 9.

When the wavelength $\lambda$ of the laser diode 1 is changed, as shown in, e.g., Fig. 3, the incident angle $\theta$ changes on the basis of equation (9). In this case, from equation (4), a Doppler signal F is given by:

$$F = 2V/d \qquad (10)$$

Thus, a stable signal can be detected.

With the structure according to the second embodiment of the present invention, the parallel side surfaces of the glass member 11 can be easily formed by a control in the manufacturing process. Thus, the structure of this embodiment is very stable against aging, and structural stability is very high.

In this embodiment, since the light beams are reflected a plurality of times within the glass block 11 to be radiated on an object, a relatively long optical path can be set in the glass block which is not easily influenced by an environmental change without increasing the size of the glass block. A distance (working distance) from the glass block 11 to a measurement point, i.e., a crossing point of the two light beams, must be increased to avoid a contact between an object to be measured and the velocimeter when they are unnecessarily close to each other. In order to increase the working distance, the crossing angle of the two light components must be decreased. In order to decrease the crossing angle of the two light beams in a structure wherein two diffraction lights from the diffraction grating are reflected by two parallel reflection surfaces to cross each other on the object, the diffraction angle of the diffraction grating is decreased. In this case, however, an optical path length between the diffraction grating and the reflection surface must be prolonged. When a glass block is used, it must be designed to have a shape prolonged by a desired increase in optical path length, thus disturbing a compact structure. In this embodiment, since the optical path between the diffraction grating and the reflection surface is turned within the glass block 11, the optical path length can be increased without increasing the length of the glass block in the right-and-left direction of Fig. 8A. Therefore, the working distance can be increased without increasing the size of the apparatus.

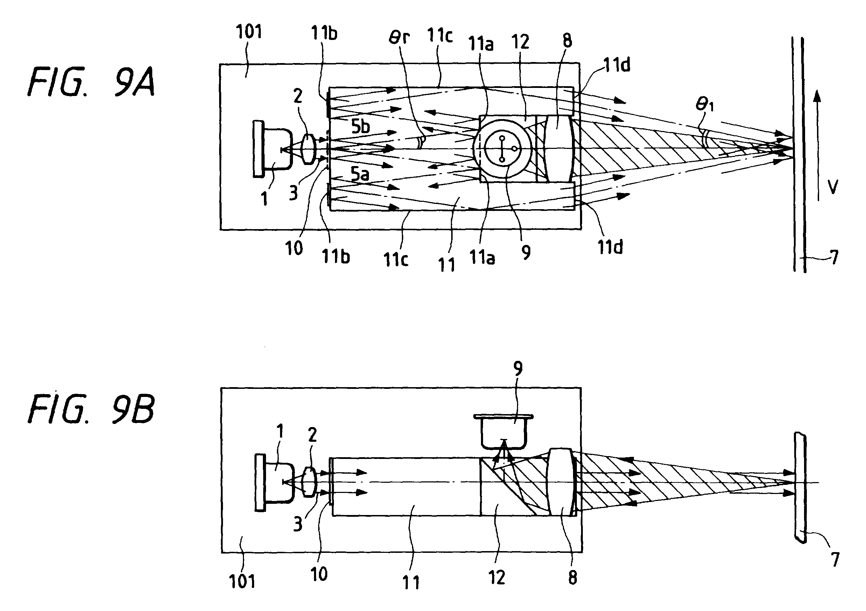

Figs. 9A and 9B show the third embodiment of the present invention. Fig. 9A is a plan view of optical paths of two light beams, and Fig. 9B is a side view of a light-receiving optical path. This embodiment is substantially the same as the embodiment in Figs. 8A and 8B, except that the shape of the glass member 11 in Figs. 8A and 8B is changed to a concave shape, and a focusing lens 8 and a reflection prism 12 are arranged in the concave portion. In this case, since the glass member 11 has a concave shape, the focusing lens 8 and the reflection prism 12 can be arranged in this open space, and a space required for an optical path can be reduced. Thus, this structure is further effective for a compact apparatus.

In this specification, the member 11 has been described as a "glass member", but may be formed of, e. g., plastic.

In the second and third embodiments, the beam transmission means 11 may comprise a hollow prism or polygonal-prism-like case having parallel reflection surfaces 6a and 6b, and the diffraction grating 10 may be integrally arranged on the upper surface of the means 11. As the diffraction grating, a reflection type diffraction grating may be similarly adopted in addition to the transmission type diffraction grating.

The incident angle of the laser beam 3 on the diffraction grating 10 is not limited to 90°. For example, the laser beam may be incident on the diffraction grating at a predetermined angle. In this case, two diffraction lights of ±nth-order diffraction lights produced by the diffraction grating 10 are incident on the moving object while maintaining the same crossing angle as the crossing angle of the two diffraction lights of the ±nth-order diffraction lights.

If a light beam emitted from an identical light source is used, and if at least one of two diffraction light components to be incident on the moving object is an nth-order diffraction light component, the other diffraction light component can have any order other than the nth order such as the 0th order, (n+1)th order, (n+2)th order, and the like.

**Claims**

1. An apparatus by means of which a velocity of an object (7) is detectable, comprising:

   illumination means (1) for generating a light having a wavelength $\lambda$ ;
   optical means comprising a diffraction grating (10) for diffracting the light from said illumination means (1) and an optical element (6a, 6b; 11a-d) for causing the diffraction light from said diffraction grating to be incident on said object (7) at an incident angle $\Theta$, and;
   light detection means (8, 9, 12) for detecting the frequency of the scattered light from the object (7) on which the light from said optical means is incident so that the velocity of the object is obtainable on the basis of said frequency, incident angle and wavelength, wherein,
   said diffraction grating and said optical element are arranged to change the incident angle in a direction in which an error component of frequency signal output from said signal light detection means is prevented from being generated due to a change in wavelength $\lambda$ of the light from said illumination means,

**characterized in that**
said diffraction grating (10) and said optical element (6a, 6b, 11a-d) are optically integrated in a single light transmission block (11).

2. An apparatus according to claim 1, **characterized in that** said light detecting means comprises a photosensor used for detecting a frequency signal of the light from the object.

3. An apparatus according to claim 1, **characterized in that** said light transmission block (11) comprises a block formed of glass.

4. An apparatus according to claim 3, **characterized in that** said diffraction grating (10) is formed on a surface (11a) of said block (11).

5. An apparatus according to claim 2 or 3, **characterized in that** said optical element (6a, 6b, 11a-11d) is a reflection surface formed on a surface of said block (11).

6. An apparatus according to claims 3 to 5, **characterized in that** said reflection surface reflects the diffraction light (5a, 5b) produced in said block (11) from said diffraction grating (10) to radiate the light from the block onto the object (7).

7. An apparatus according to claim 5 or 6, **characterized in that** said reflection surface includes two surfaces (6a, 6b), and said two reflection surfaces are arranged to reflect two diffraction lights (5a, 5b) from said diffraction grating (10) to radiate the diffraction lights to a substantially identical position on the object (7).

8. An apparatus according to claim 7, **characterized in that** said two reflection surfaces (6a, 6b) are parallel to each other, and are arranged to be perpendicular to a grating arranging direction (t) of said diffraction grating (10).

9. An apparatus according to claim 8, **characterized in that** said two reflection surfaces (6a, 6b) respectively reflect an +nth-order diffraction light and an -nth-order diffraction light produced from said diffraction grating (10) as the two diffraction lights (5a, 5b).

10. An apparatus according to claim 6, **characterized in that** said reflection surface includes a plurality of surfaces (11a, 11b, 11c), and the plurality of reflection surfaces are arranged to reflect the two diffraction lights (5a, 5b) so that the two diffraction lights from said diffraction grating (10) are radiated on a substantially identical position on the object after the diffraction lights are reflected a plurality of times within said block (11).

11. An apparatus according to claim 3, **characterized in that** said block (11) has a concave portion on a side facing the object (7), and said light detection means (8, 9, 12) detects the light via said concave portion.

12. A velocimeter for detecting a velocity of an object, comprising an apparatus according to one of claims 1 to 11.

13. A velocimeter for detecting a velocity of an object comprising an apparatus according to one of claims 1, 5, and 7 to 11, wherein said diffraction grating and said optical element are arranged so that a crossing angle of the two diffraction lights on the object substantially coincides with an angle which is formed in air by the two diffraction lights immediately after the diffraction lights emit from said diffraction grating independently of a change in wavelength of the light from said light source.

14. A velocimeter according to claim 12, **characterized in that** said optical element comprises a plurality of reflection surfaces arranged to reflect the two diffraction lights so that the two diffraction lights from said diffraction grating are radiated on the object after the diffraction lights are reflected a plurality of times within said light-transmission block.

15. A velocimeter according to claim 12, characterized in that said diffraction grating (10) and said optical element (6a, 6b; 11a-d) being arranged so that sin $(\Theta)/\lambda$ is substantially constant independently of a change in wavelength $\lambda$ of the light from said illumination means.

**Patentansprüche**

1. Gerät, mit dem die Geschwindigkeit eines Objekts (7) nachweisbar ist, umfassend:

eine Beleuchtungseinrichtung (1) zum Erzeugen von Licht mit einer Wellenlänge $\lambda$;
eine optische Einrichtung, umfassend ein Beugungsgitter (10) zum Beugen des Lichts von der Beleuchtungseinrichtung (1) und ein optisches Element (6a, 6b; 11a-d), um zu verursachen, daß das Beugungslicht von dem Beugungsgitter auf das Objekt (7) bei einem Einfallswinkel $\Theta$ einfällt, und;
eine Lichtnachweiseinrichtung (8,9,12) zum Bestimmen der Frequenz des von dem Objekt (7), auf das das Licht von der optischen Einrichtung einfällt, gestreuten Lichts, so daß die Geschwindigkeit des Objekts auf der Grundlage der Frequenz, des Einfallswinkels und der Wellenlänge erhältlich ist, wobei

das Beugungsgitter und das optische Element so angeordnet sind, daß der Einfallswinkel in einer Richtung verändert wird, in der verhindert wird, daß eine Fehlerkomponente des Frequenz-Ausgangssignals von der Signal-Lichtnachweiseinrichtung aufgrund einer Änderung der Wellenlänge λ des Lichts von der Beleuchtungseinrichtung erzeugt wird,

**dadurch gekennzeichnet, daß**

das Beugungsgitter (10) und das optische Element (6a,6b,11a-d) optisch in einem einzelnen Licht-Transmissionsblock (11) integriert sind.

2. Gerät nach Anspruch 1, **dadurch gekennzeichnet, daß** die Lichtnachweiseinrichtung einen Photosensor umfaßt, der zum Nachweisen eines Frequenzsignals des Lichts von dem Objekt verwendet wird.

3. Gerät nach Anspruch 1, **dadurch gekennzeichnet, daß** der Licht-Transmissionsblock (11) einen aus Glas gebildeten Block umfaßt.

4. Gerät nach Anspruch 3, **dadurch gekennzeichnet, daß** das Beugungsgitter (10) auf einer Oberfläche (11a) des Blocks (11) gebildet ist.

5. Gerät nach Anspruch 2 oder 3, **dadurch gekennzeichnet, daß** das optische Element (6a,6b,11a-d) eine auf einer Oberfläche des Blocks (11) gebildete Reflexionsoberfläche ist.

6. Gerät nach einem der Ansprüche 3 bis 5, **dadurch gekennzeichnet, daß** die Reflexionsoberfläche das in dem Block (11) von dem Beugungsgitter (10) erzeugte Beugungslicht (5a,5b) reflektiert, wobei das Licht von dem Block auf das Objekt (7) eingestrahlt wird.

7. Gerät nach Anspruch 5 oder 6, **dadurch gekennzeichnet, daß** die Reflexionsoberfläche zwei Oberflächen (6a,6b) umfaßt, und die zwei Reflexionsoberflächen so angeordnet sind, daß zwei Beugungslichtstrahlen (5a,5b) von dem Beugungsgitter (10) reflektiert werden, wobei die Beugungslichtstrahlen auf eine im wesentlichen identische Position auf dem Objekt (7) gestrahlt werden.

8. Gerät nach Anspruch 7, **dadurch gekennzeichnet, daß** die zwei Reflexionsoberflächen (6a,6b) parallel zueinander sind, und so angeordnet sind, daß sie senkrecht zu einer Gitter-Anordnungsrichtung (t) des Beugungsgitters (10) sind.

9. Gerät nach Anspruch 8, **dadurch gekennzeichnet, daß** die zwei Reflexionsoberflächen (6a,6b) jeweils einen Beugungslichtstrahl +n. und -n. Ordnung reflektieren, die von dem Beugungsgitter (10) als die zwei Beugungslichtstrahlen (5a,5b) erzeugt werden.

10. Gerät nach Anspruch 6, **dadurch gekennzeichnet, daß** die Reflexionsoberfläche eine Vielzahl von Oberflächen (11a,11b,11c) umfaßt und die Vielzahl von Reflexionsoberflächen so angeordnet sind, daß die zwei Beugungslichtstrahlen (5a,5b) reflektiert werden, so daß die zwei Beugungslichtstrahlen von dem Beugungsgitter (10) auf eine im wesentlichen identische Position auf dem Objekt eingestrahlt werden, nachdem die Beugungslichtstrahlen mehrere Male innerhalb des Blocks (11) reflektiert worden sind.

11. Gerät nach Anspruch 3, **dadurch gekennzeichnet, daß** der Block (11) einen konkaven Bereich auf einer Seite hat, die dem Objekt (7) gegenübersteht, und die Licht-Nachweiseinrichtung (8, 9, 12) das Licht über den konkaven Bereich nachweist.

12. Velocimeter zum Bestimmen einer Geschwindigkeit eines Objekts, umfassend ein Gerät nach einem der Ansprüche 1 bis 11.

13. Velocimeter zum Bestimmen einer Geschwindigkeit eines Objekts, umfassend ein Gerät nach einem der Ansprüche 1, 5 und 7 bis 11, wobei das Beugungsgitter und das optische Element so angeordnet sind, daß ein Kreuzungswinkel der zwei Beugungslichtstrahlen auf dem Objekt im wesentlichen mit einem Winkel zusammenfällt, der von den zwei Beugungslichtstrahlen unmittelbar nachdem die Beugungslichtstrahlen von dem Beugungsgitter emittiert worden sind in der Luft gebildet wird, unabhängig von einer Veränderung der Wellenlänge des Lichts von der Lichtquelle.

14. Velocimeter nach Anspruch 12, **dadurch gekennzeichnet, daß** das optische Element eine Vielzahl von Reflexionsoberflächen umfaßt, die angeordnet sind, um die zwei Beugungslichtstrahlen so zu reflektieren, daß die zwei Beugungslichtstrahlen von dem Beugungsgitter auf das Objekt eingestrahlt werden, nachdem die Beugungslichtstrahlen mehrere Male in dem Licht-Transmissionsblock reflektiert worden sind.

15. Velocimeter nach Anspruch 12, **dadurch gekennzeichnet, daß** das Beugungsgitter (10) und das optische Element (6a,6b;11a-d) so angeordnet sind, daß $\sin(\Theta)/\lambda$ im wesentlichen konstant ist, unabhängig von einer Veränderung der Wellenlänge λ des Lichts von der Beleuchtungseinrichtung.

## Revendications

1. Appareil au moyen duquel la vitesse d'un objet (7) peut être mesurée, comprenant :

   un moyen d'éclairage (1) servant à produire une lumière ayant une longueur d'onde λ;
   un moyen optique comprenant une grille de diffraction (10) conçue pour diffracter la lumière provenant dudit moyen d'éclairage (1) et un élément optique (6a, 6b; 11a à d) conçu pour forcer la lumière de diffraction provenant de ladite grille de diffraction à arriver sur ledit objet (7) selon un angle incident θ, et
   des moyens de détection de lumière (8, 9, 12) conçus pour détecter la fréquence de la lumière diffusée provenant de l'objet (7) sur lequel arrive la lumière provenant dudit moyen optique, de manière que la vitesse de l'objet puisse être obtenue d'après la dite fréquence, l'angle incident et la longueur d'onde, dans lequel,
   ladite grille de diffraction et ledit élément optique sont conçus pour modifier l'angle incident dans une direction dans laquelle une composante d'erreur d'un signal de fréquence émis par ledit moyen de détection de lumière de signaux est empêché d'être produite en raison d'une variation de la longueur d'onde λ de la lumière provenant du dit moyen d'éclairage,

   caractérisé en ce que
   ladite grille de diffraction (10) et ledit élément optique (6a, 6b; 11a à d) sont intégrés optiquement dans un bloc de transmission de lumière (11) unique.

2. Appareil selon la revendication 1, caractérisé en ce que ledit moyen de détection de lumière comprend un photocapteur utilisé pour détecter un signal de fréquence de la lumière provenant de l'objet.

3. Appareil selon la revendications 1, caractérisé en ce que ledit bloc de transmission de lumière (11) comprend un bloc en verre.

4. Appareil selon la revendication 3, caractérisé en ce que ladite grille de diffraction (10) est formée sur une surface (11a) dudit bloc (11).

5. Appareil selon la revendication 2 ou 3, caractérisé en ce que ledit élément optique (6a, 6b; 11a à d) est une surface réfléchissante formée sur une surface dudit bloc (11).

6. Appareil selon les revendications 3 à 5, caractérisé en ce que ladite surface de réflexion réfléchie la lumière de diffraction (5a, 5b) produite dans ledit bloc (11), à partir de ladite grille de diffraction (10), afin de rayonner a lumière provenant du bloc sur l'objet (7).

7. Appareil selon la revendication 5 ou 6 caractérisé en ce que ladite surface réfléchissante comprend deux surfaces (6a, 6b), et lesdites deux surfaces réfléchissantes sont agencées pour réfléchir deux lumières de diffraction (5a, 5b) provenant de ladite grille de diffraction (11), afin de rayonner les lumières de diffraction dans une position sensiblement identique sur l'objet (7).

8. Appareil selon la revendication 7, caractérisé en ce que lesdites deux surfaces réfléchissantes (6a, 6b) sont parallèles entre elles et sont agencées de façon à être perpendiculaires à une direction d'agencement de grille t de ladite grille de diffraction (10).

9. Appareil selon la revendication 8, caractérisé en ce que lesdites deux surfaces réfléchissantes (6a, 6b) réfléchissent respectivement une lumière de diffraction d'ordre +n et une lumière de diffraction d'ordre -n, produite par ladite grille de diffraction (10) sous la forme des deux lumières de diffraction (5a, 5b).

10. Appareil selon la revendication 6, caractérisé en ce que ladite surface réfléchissante comprend une pluralité de surfaces (11a, 11b, 11c) et la pluralité de surfaces réfléchissantes est agencée de façon à réfléchir les deux lumières de diffraction (5a, 5b), de manière que le deux lumières de diffraction provenant de ladite grille de diffraction (10) soit rayonnée en une position sensiblement identique sur l'objet, après que les lumières de diffraction aient été réfléchies plusieurs fois dans ledit bloc (11).

11. Appareil selon la revendication 3, caractérisé en ce que ledit bloc (11) présente une partie concave sur un côté tourné vers l'objet (7), et ledit moyen de détection de lumière (8, 9, 12) détecte la lumière via la dite partie concave.

12. Vélocimètre conçu pour mesurer la vitesse d'un objet, comprenant un appareil selon l'une des revendications 1 à 11.

13. Vélocimètre conçu pour mesurer la vitesse d'un objet, comprenant un appareil selon l'une des revendications 1 à 5 et 7 à 11, dans lequel ladite grille de diffraction et ledit élément optique sont agencés de manière qu'un angle transversal des deux lumières de diffraction sur l'objet coïncident sensiblement avec un angle qui est formé dans l'air par les deux lumières de diffraction, immédiatement après l'émission des lumières de diffraction par ladite grille de diffraction, indépendamment d'une variation de la longueur d'onde de la lumière émise par ladite source de lumière.

14. Vélocimètre selon la revendication 12, caractérisé en ce que ledit élément optique comprend une pluralité de surfaces réfléchissantes, agencées de façon à réfléchir les deux lumières de diffraction, de manière que le deux lumières de diffraction provenant de ladite grille de diffraction soit rayonnée sur l'objet, après que les lumières de diffraction aient été réfléchies plusieurs fois dans ledit bloc de transmission de lumière.

15. Vélocimètre selon la revendication 12, caractérisé en ce que ladite grille de diffraction (10) et ledit élément optique (6a, 6b; 11a à d) sont agencés de manière que sin $(\theta)/\lambda$ soit sensiblement constant indépendamment d'une variation de la longueur d'onde $\lambda$ de la lumière émise par ledit moyen d'éclairage.

# FIG. 1

# FIG. 2

CASE-TEMPERATURE-
DEPENDENCY OF EMISSION
WAVELENGTH

FIG. 3

FIG. 4

## FIG. 5

## FIG. 6

FIG. 7

EP 0 476 677 B1

FIG. 8A

FIG. 8B

FIG. 9A

FIG. 9B

EP 0 476 677 B1